Europäisches Patentamt

(19) European Patent Office

Office européen des brevets

(11) Numéro de publication : **0 306 364 B1**

(12) **FASCICULE DE BREVET EUROPEEN**

(51) Int. Cl.⁵ : **B60R 13/00, B32B 3/12**

(45) Date de publication du fascicule du brevet :
24.04.91 Bulletin 91/17

(21) Numéro de dépôt : **88401970.4**

(22) Date de dépôt : **28.07.88**

(54) **Pièce de carrosserie en matériau stratifié et sa fabrication.**

(30) Priorité : **04.08.87 FR 8711060**

(43) Date de publication de la demande :
**08.03.89 Bulletin 89/10**

(45) Mention de la délivrance du brevet :
**24.04.91 Bulletin 91/17**

(84) Etats contractants désignés :
**DE GB IT**

(56) Documents cités :
**FR-A- 1 528 068**
**US-A- 3 857 217**
**US-A- 4 353 947**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Grand, Evelyne**
**80, Avenue du Général de Gaulle**
**F-92250 La Garenne-Colombes (FR)**
Inventeur : **Gérard, André**
**5 rue de Gerbevilliers**
**F-25400 Audincourt (FR)**

(74) Mandataire : **Varady, Peter et al**
**Cabinet Lavoix 2, Place d'Estienne d'Orves**
**F-75441 Paris Cedex 09 (FR)**

## Description

L'invention concerne une pièce de carrosserie telle qu'un pavillon de véhicule automobile en un matériau stratifié, ainsi que le procédé de réalisation d'une telle pièce de carrosserie.

Les pièces de carrosserie sont en général fabriquées en tôle et sont donc relativement lourdes, à une époque où les constructeurs automobiles essaient de diminuer le poids des véhicules.

On connaît d'autres matériaux plus légers mais présentant l'inconvénient d'être plus coûteux.

C'est pourquoi l'invention a pour but un matériau susceptible de constituer notamment une pièce de carrosserie, qui soit rigide, léger et bon marché.

L'invention a donc pour objet une pièce de carrosserie de véhicule automobile, notamment pavillon, panneau de coffre, tablette arrière, constituée d'un matériau stratifié, caractérisée en ce que le matériau stratifié comporte une structure centrale alvéolaire est prise au moins entre deux toiles de jute liées à ladite structure au moyen de résine. La structure centrale alvéolaire est notamment une structure en nid d'abeilles qui peut être en carton, papier, aluminium ou polyamide et d'épaisseur par exemple voisine de 8 mm. Selon une variante, les toiles de jute sont préenduites de résine.

Pour réaliser une pièce dans le matériau selon l'invention, on procède de la façon suivante :

1) projection, par exemple au pistolet, de résine dans un moule chauffé, à une température qui peut être voisine de 80°C ;
2) positionnement d'une toile de jute dans le moule ;
3) projection de résine ;
4) positionnement de la structure alvéolaire ;
5) projection de résine ;
6) positionnement d'une toile de jute ;
7) projection de résine ;
8) fermeture du moule ;
9) compression (par exemple pendant 5 à 10 minutes).

Pour la réalisation d'un pavillon de véhicule automobile, destiné à être peint sur sa face externe et recouvert de tissu ou moquette sur sa face interne, on ajoutera les deux étapes supplémentaires suivantes:

– avant l'étape n° 1 ou après l'étape n° 7, projection d'un "gel coat" qui est une couche d'apprêt, permettant de peindre le matériau par la suite. Le gel coat est une matière pulvérulente réactive basée sur un mélange de résine polyester et de monomère spécifique. Il est pistolé sur la surface chaude du moule où il se polymérise rapidement;
– après l'étape n° 7 ou avant l'étape n° 1, positionnement d'un tissu ou d'une moquette.

On peut éventuellement ne pas appliquer de couche de peinture sur le gel coat, celui-ci restant alors apparent sur la face externe du pavillon.

Le gel coat de l'étape supplémentaire ci-dessus peut être remplacé par un produit dénommé IMC (In Mould Coating) : il s'agit d'un polyester que l'on injecte dans le moule après une première phase de cuisson du matériau, donc après l'étape n° 9. On exerce à nouveau une compression du moule après injection de l'IMC afin de procéder à la cuisson de celui-ci. Dans ce cas, le tissu ou la moquette sont positionnés dans le moule, avant l'étape n° 1.

Eventuellement on peut réaliser un pavillon non recouvert de tissu, la toile de jute restant alors visible à l'intérieur de l'habitacle du véhicule et servant de décor.

Pour assurer une bonne finition du pavillon et une étanchéité sur les bords de celui-ci, on prévoit d'écraser ces bords dans le moule. Dans ce but, les parties supérieure et inférieure du moule sont conçues de façon que l'espace qui les sépare, en position de fermeture du moule, soit nettement plus faible au niveau des bords que dans la partie centrale où cet espace a pour épaisseur constante l'épaisseur du matériau terminé.

A titre d'exemple, on a utilisé comme résine une résine polyester insaturée en solution dans le styrène, par exemple URALAM 13780 de la Firme SHEBY, avec les caractéristiques suivantes :

– viscosité à 25°C : 200 mPa.s
– extrait sec : 59%
– densité à 25°C : 1,12
– indice d'acide : 25.

On a utilisé un "gel coat", par exemple l'apprêt polyester ponçable 3151 de la Firme TECHNIBAT, ayant pour viscosité à 20°C 1000 à 1200 mPa.S et une densité de 1,66.

On a utilisé une toile de jute dont le grenage était de 305 g/m$^2$, mais d'autres grenages pourraient être utilisés.

Les pièces de carrosserie fabriquées selon l'invention présentent l'avantage d'être rigides et résistantes tout en étant légères et bon marché. Le nouveau matériau stratifié remplace donc avantageusement d'autres matériaux tels que la tôle, dans les véhicules automobiles.

Bien entendu l'invention n'est pas limitée au mode de réalisation décrit.

Ainsi, la projection de résine ou de gel coat au pistolet peut être remplacée par une opération de coulage au moyen d'une rampe placée au-dessus du moule.

Dans le matériau selon l'invention, la structure alvéolaire peut aussi être par exemple en carton ondulé.

On peut également, dans une variante de réalisation, intercaler un ou plusieurs mats de verre, c'est-à-dire une ou plusieurs nappes constituées de fibres coupées ou non, orientées ou non et maintenues ensemble par un liant, entre la structure alvéolaire et chaque toile de jute, avec projection de résine entre les différents constituants superposés.

## Revendications

1. Pièce de carrosserie de véhicule automobile, notamment pavillon, panneau de coffre, tablette arrière, constituée d'un matériau stratifié, caractérisée en ce que le matériau stratifié comporte une structure centrale alvéolaire prise au moins entre deux toiles de jute liées à ladite structure au moyen de résine.

2. Pièce de carrosserie selon la revendication 1, caractérisée en ce que la structure centrale alvéolaire est une structure en nid d'abeilles.

3. Pièce de carrosserie selon l'une des revendications 1 ou 2, caractérisée en ce que le matériau est revêtu sur l'une de ses faces d'une couche d'apprêt.

4. Pièce de carrosserie selon l'une quelconque des revendications 1 à 3, caractérisée en ce que le matériau est revêtu sur l'une de ses faces d'un tissu ou moquette.

5. Pièce de carrosserie selon l'une des revendications 1 à 4, caractérisée en ce que le matériau comporte en outre un ou plusieurs mats de verre intercalés entre la structure alvéolaire et les toiles de jute.

6. Procédé de fabrication d'une pièce de carrosserie selon la revendication 1 ou la revendication 2, caractérisé par les étapes suivantes : 1) projection de résine dans un moule chauffé ; 2) positionnement d'une toile de jute dans le moule ; 3) projection de résine ; 4) positionnement de la structure alvéolaire ; 5) projection de résine ; 6) positionnement d'une toile de jute ; 7) projection de résine polyester ; 8) fermeture du moule ; 9) compression.

7. Procédé selon la revendication 6, caractérisé par l'étape supplémentaire de projection d'un gel coat à 'la surface du moule chauffé avant l'étape (1) ou après l'étape (7).

8. Procédé selon la revendication 6, caractérisé par l'étape d'injection d'un IMC après l'étape (9).

9. Procédé selon la revendication 6, caractérisé par l'étape supplémentaire de positionnement d'un tissu après l'étape (7) ou avant l'étape (1).

10. Procédé selon l'une des revendications 6 à 9, caractérisé en ce qu'il comporte entre les étapes (3) et (4) et entre les étapes (5) et (6), une étape de positionnement d'un mat de verre.

11. Pièce de carrosserie de véhicule automobile, caractérisée par le fait qu'elle est réalisée au moyen du procédé selon l'une des revendications 8 ou 9 dans un moule dont l'espace entre les parties supérieure et inférieure est, en position de fermeture du moule, très faible au niveau des bords du moule de façon à écraser le matériau au niveau des bords de la pièce.

## Ansprüche

1. Karosserieteil für Kraftfahrzeuge, insbesondere Dach, Kofferraumdeckel, Rückwand, gebildet aus einem Schichtmaterial, dadurch **gekennzeichnet**, daß das Schichtmaterial eine zentrale Zellstruktur aufweist, die zwischen wenigstens zwei Jutegewebe-Bahnen liegt, die mit der Zellstruktur mit Hilfe eines Harzes verbunden sind.

2. Karosserieteil nach Anspruch 1, dadurch **gekennzeichnet**, daß die zentrale Zellstruktur eine Wabenmuster-Struktur ist.

3. Karosserieteil nach Anspruch 1 oder 2, dadurch **gekennzeichnet**, daß das Material auf einer seiner Seiten durch eine Schicht aus Appretur überzogen ist.

4. Karosserieteil nach einem der Ansprüche 1 bis 3, dadurch **gekennzeichnet**, daß das Material auf einer seiner Seiten mit einer Schicht aus Stoff oder Teppichboden überzogen ist.

5. Karosserieteil nach einem der Ansprüche 1 bis 4, dadurch **gekennzeichnet**, daß das Material im übrigen eine oder mehrere Glasmatten zwischen der Wabenstruktur und den Jutegewebe-Bahnen aufweist.

6. Verfahren zur Herstellung eines Karosserieteils nach Anspruch 1 oder 2, **gekennzeichnet** durch folgende Schritte : 1) Einfüllen von Harz in eine geheizte Form ; 2) Positionieren einer Jutegewebe-Bahn in der Form ; 3) Einfüllen von Harz ; 4) Positionieren der Zellstruktur ; 5) Einfüllen von Harz ; 6) Positionieren einer Jutegewebe-Bahn ; 7) Einfüllen von Polyesterharz ; 8) Schließen der Form ; 9) Druck.

7. Verfahren nach Anspruch 6, **gekennzeichnet** durch den zusätzlichen Schritt des Einbringens eines Gel-Überzugs auf die Oberfläche der geheizten Form vor Schritt 1) oder nach Schritt 7).

8. Verfahren nach Anspruch 6, **gekennzeichnet** durch den Schritt des Einspritzens eines IMC (In Mould Coating) nach Schritt 9).

9. Verfahren nach Anspruch 6, **gekennzeichnet** durch den zusätzlichen Schritt des Positionierens eines Stoffes nach Schritt 7) oder vor Schritt 1).

10. Verfahren nach einem der Ansprüche 6 bis 9, dadurch **gekennzeichnet**, daß zwischen den Schritten 3) und 4) und zwischen den Schritten 5) und 6) ein Schritt des Positionierens einer Glasmatte vorgesehen ist.

11. Karosserieteil für Kraftfahrzeuge, dadurch **gekennzeichnet**, daß es mit Hilfe des Verfahrens gemäß einem der Ansprüche 8 oder 9 in einer Form hergestellt ist, deren Raum zwischen den oberen und unteren Teilen in der geschlossenen Position sehr gering ist im Bereich der Ränder der Form, so daß das Material im Bereich der Ränder des Karosserieteils eingedrückt ist.

## Claims

1. Body component for a motor vehicle, in particular the roof panel, boot lid, or rear shelf, consisting of a laminated material, characterised in that the laminated material comprises a central alveolar structure retained between at least two canvas sheets which are connected to the said structure by means of resin.

2. Body component according to claim 1, characterised in that the central alveolar structure is a honeycombed structure.

3. Body component according to either of claims 1 or 2, characterised in that the material is covered, on one of its surfaces, with a finishing layer.

4. Body component according to any one of claims 1 to 3, characterised in that the material is covered, on one of its surfaces, with fabric or upholstery.

5. Body component according to one of claims 1 to 4, characterised in that the material further comprises one or more mats of glass inserted between the alveolar structure and the canvas sheets.

6. Method of manufacturing a body component according to claim 1 or claim 2, characterised by the following stages : 1) injection of resin into a heated mould ; 2) positionning of a canvas sheet in the mould ; 3) spraying of resin ; 4) positionning of the alveolar structure ; 5) injection of resin ; 6) positionning of a canvas ; 7) injection of polyester resin ; 8) closure of the mould ; 9) compression.

7. Method according to claim 6, characterised by the additional step of spraving a gel coat onto the surface of the heated mould before step (1) or after step (7).

8. Method according to claim 6, characterised by a step wherein an IMC is injected after step 9.

9. Method according to claim 6, characterised by an additional step in which a piece of fabric is put in position after step (7) or before step (1).

10. Method according to one of claims 6 to 9, characterised in that it comprises, between steps (3) and (4) and between steps (5) and (6), a step in which a glass mat is put into position.

11. Body component of an automobile vehicle, characterised by being manufactured, using the method according to either of claims 8 or 9, in a mould in which the space between the upper and the lower parts is, when the mould is closed, very small at the edges of the mould in order to compress the material at the edges of the component.